(19) Europäisches Patentamt
European Patent Office
Office européen des brevets

(11) **EP 4 089 872 A1**

(12) **EUROPEAN PATENT APPLICATION**

(43) Date of publication:
**16.11.2022 Bulletin 2022/46**

(21) Application number: **22161011.6**

(22) Date of filing: **09.03.2022**

(51) International Patent Classification (IPC):
**H02J 3/38** (2006.01)      **H02J 3/48** (2006.01)

(52) Cooperative Patent Classification (CPC):
**H02J 3/381; H02J 3/48;** H02J 2300/30

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.05.2021   JP 2021080932**

(71) Applicant: **Hitachi, Ltd.**
**Tokyo 100-8280 (JP)**

(72) Inventors:
• **FURUTA, Futoshi**
**Chiyoda-ku, 100-8280 (JP)**
• **WATANABE, Keiji**
**Chiyoda-ku, 100-8280 (JP)**
• **HASEGAWA, Hiroaki**
**Chiyoda-ku, 100-8280 (JP)**
• **NISHIDE, Akinori**
**Chiyoda-ku, 100-8280 (JP)**
• **YAMAZOE, Takanori**
**Chiyoda-ku, 100-8280 (JP)**

(74) Representative: **Mewburn Ellis LLP**
**Aurora Building**
**Counterslip**
**Bristol BS1 6BX (GB)**

(54) **POWER SUPPLY SYSTEM, POWER SUPPLY MANAGEMENT DEVICE, AND POWER SUPPLY**

(57)      A power supply system that can control a power according to a dynamic characteristic of a power source is provided. In a power supply system that supplies a power to a load from multiple power supplies connected in parallel, each of the power supplies includes a power supply and a power supply circuit, and the power supply circuit includes a drooping characteristic calculation unit that calculates a voltage command value to cause an output voltage output by the power supply to droop at a predetermined drooping rate with respect to the output power, and a ramp rate control unit that corrects the voltage command value to reduce an amount of change of the output voltage when the amount of change of the output power per unit time exceeds a predetermined ramp rate, and a ramp rate different according to the type of the power source is set for each of the power supplies.

FIG. 1A

FIG. 1B

**Description**

BACKGROUND OF THE INVENTION

The present invention relates to a power supply system, a power supply management device, and a power supply, which supply a power to a load.

Japanese Unexamined Patent Application Publication No. 2008-130424 discloses a fuel cell system that supplies a power to a load (motor) by paralleling a fuel cell and a storage battery (secondary battery). When a voltage of the fuel cell is monitored and a sudden load fluctuation occurs, the deterioration of the fuel cell is prevented by limiting an output increase of the fuel cell to follow the load fluctuation. A shortfall due to this limitation is calculated in advance from load information, and a DC/DC converter is instructed to compensate for the shortfall with the output power from the storage battery.

In the fuel cell system of Japanese Unexamined Patent Application Publication No. 2008-130424, the fuel cell is directly connected to the load, and a contribution power from the fuel cell cannot be changed autonomously. For that reason, a control unit calculates a difference between the load power and the power from the fuel cell, and operates the power supply circuit (DC/DC converter) connected to the storage battery to compensate for the difference. In order to calculate a command value of this power difference (shortfall), load fluctuation prediction information is required. For this reason, in the system disclosed to Japanese Unexamined Patent Application Publication No. 2008-130424, it is required that a relationship between the power supply and the load is closely fixed, such as a fuel cell system mounted on a vehicle.

Furthermore, although there is no problem if the load power changes according to the fluctuation prediction information, a power actually required may be different from the load fluctuation prediction such as when actually receiving a resistance such as slip or headwind of a vehicle body. A discrepancy between the storage battery command and the actual load power at that time is offset by the power from the fuel cell, which puts a burden on the fuel cell.

In order to realize a low-carbon society, there is a growing movement to incorporate hydrogen-fueled generators and batteries into power supplies. On the other hand, proposals and adoption of power supply configurations independent of conventional systems such as thermal power generation using fossil fuels are becoming more active in response to the movement to reduce carbon emissions. Examples of such movement include trains using solid polymer fuel cells (PEFC) of hydrogen fuel cells and microgrid applications using solid oxide fuel cells (SOFC).

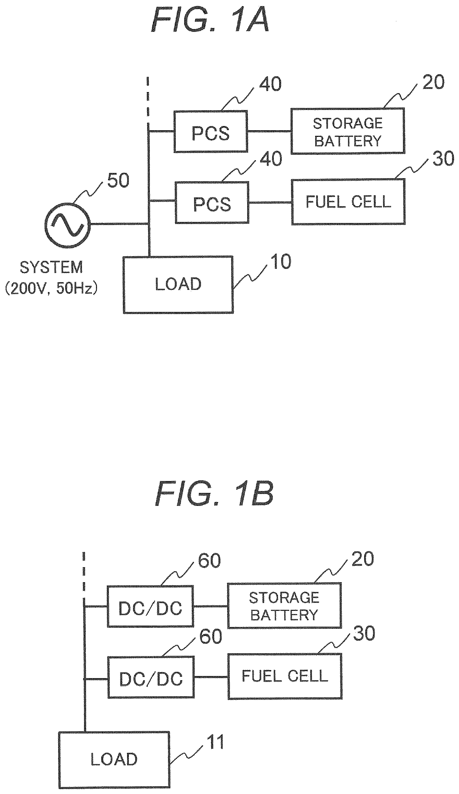

FIGS. 1A and 1B show examples of power supply systems that have multiple power sources and supply a power to a load. FIG. 1A shows a power supply system connected to a system such as a renewable energy site, and FIG. 1B is a power supply system that independently supplies a power to the load like a mobile body such as a vehicle. Since a storage battery 20 and a fuel cell 30 each generate a DC voltage, when the storage battery 20 and the fuel cell 30 are interconnected to a system 50 (FIG. 1A), the storage battery 20 and the fuel cell 30 are connected to a load 10 through each power conditioning system (PCS) 40, and each DC power is converted into an AC power, and then supplied to the load 10. In FIG. 1B, the storage battery 20 and the fuel cell 30 may supply a DC power to a load 11, so that the storage battery 20 and the fuel cell 30 are connected to the load 11 through each DC/DC converter 60. The PCSs 40 or the DC/DC converters 60 are responsible for controlling the amount of power supplied by each power supply according to a load power utilized by the load.

When power is contributed to a common load from the multiple power supplies as shown in FIGS. 1A and 1B, there is a need to adjust the distribution of power between the power supplies. In an environment such as a microgrid in which an unspecified number of loads and power supplies are expected to be connected or parallel-off, a control mechanism for controlling a supply power for each power supply cannot be provided as disclosed in Japanese Unexamined Patent Application Publication No. 2008-130424. Even in such a case, since each power supply connected in parallel is autonomously divided into loads and operated, a technology has been known to operate each power supply with drooping characteristics.

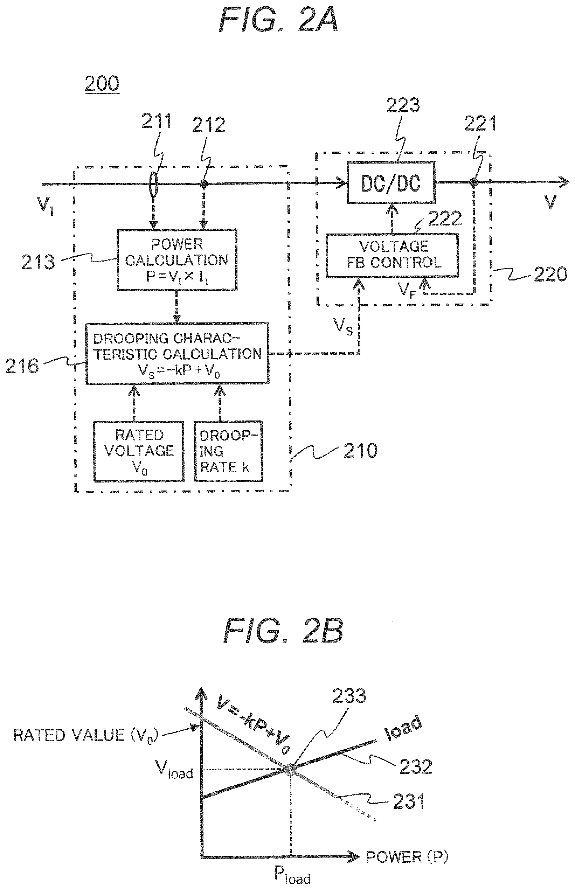

FIG. 2A shows a block diagram of a DC/DC converter with drooping characteristics (hereinafter referred to as a droop control DC power supply circuit). A droop control DC power supply circuit 200 includes a voltage control DC/DC converter 220 and a drooping characteristic calculation unit 210.

The voltage control DC/DC converter (output voltage control unit) 220 includes a narrowly defined DC/DC converter 223, a voltage feedback (FB) control unit 222, and a voltage sensor 221 that measures an output voltage V from the DC/DC converter 223. The DC/DC converter 223 controls a ratio between an input voltage $V_I$ and an output voltage V. The voltage FB control unit 222 compares a voltage command value $V_S$ from the drooping characteristic calculation unit 210 and a feedback voltage $V_F$ from the voltage sensor 221, and outputs a voltage ratio command to the DC/DC converter 223 so that the difference between those values reaches 0. As a result, the voltage control DC/DC converter 220 operates so that the output voltage V matches the voltage command value Vs.

On the other hand, the drooping characteristic calculation unit 210 is preset with a power supply rated value $V_0$ and a drooping rate k. The drooping characteristic calculation unit 216 calculates a voltage value reduced from the rated value $V_0$ by an amount obtained by multiplying the power P output by the DC/DC converter 223 by the drooping rate k, and inputs the calculated voltage value to the voltage control DC/DC converter 220 as the voltage command value $V_S$. In this example, the power P is calculated by the power calculation unit 213 using an input current $I_I$ measured by a current sensor 211 and an input voltage $V_I$ measured by a voltage sensor 212 on an input side of the DC/DC converter 223, but may be calculated using a current value and a voltage value on an output side thereof.

FIG. 2B shows an operating point when a load is connected to a drooping power supply. In the following description, a configuration that connects a power source such as a generator or a battery that generates a power to a power supply circuit that controls the power supply to the load is referred to as a power supply. The power supply circuit of the power supply having drooping characteristics may be sometimes referred to as a drooping power supply. The drooping power supply has a characteristic straight line 231 that droops an output voltage V in proportion to an output power P. On the other hand, the load (if the load is a resistor) has a load straight line 232 in which the voltage V increases according to the power P. A point at which those lines intersect with each other is an operating point 233. When the load is connected to the power supply, the power supply automatically moves to this operating point 233.

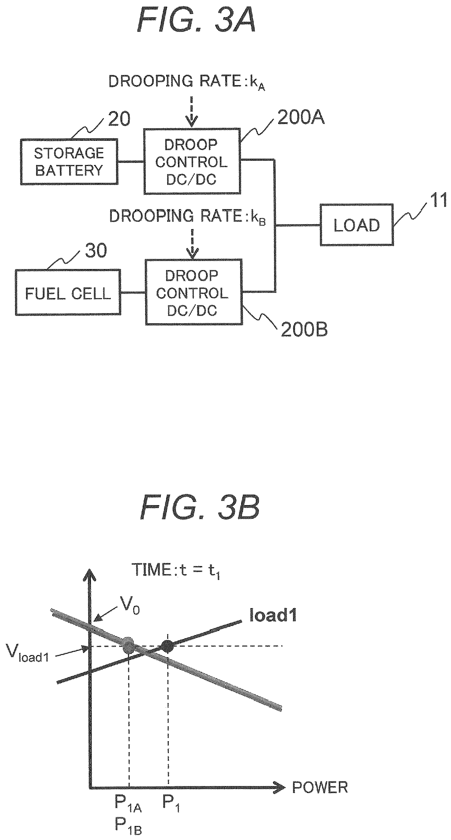

FIG. 3A shows a power supply system in which multiple drooping power supplies A and B are connected in parallel to supply a power to the load 11. The power supply A has the storage battery 20 as the power source, and the power supply B has the fuel cell 30 as the power source. In this case, as shown in FIG. 3B, the voltage droops according to a power contribution from each power supply to the load, and when the output voltages of the respective power supplies match each other, those voltages are balanced. In this example, when the power from the power supply A becomes a power $P_{1A}$ and the power from the power supply B becomes a power $P_{1B}$, the voltages are balanced. In order to change a proportional division of a power between the power supplies, inclinations of the straight lines, that is, drooping rates k, which are different from each other, may be set.

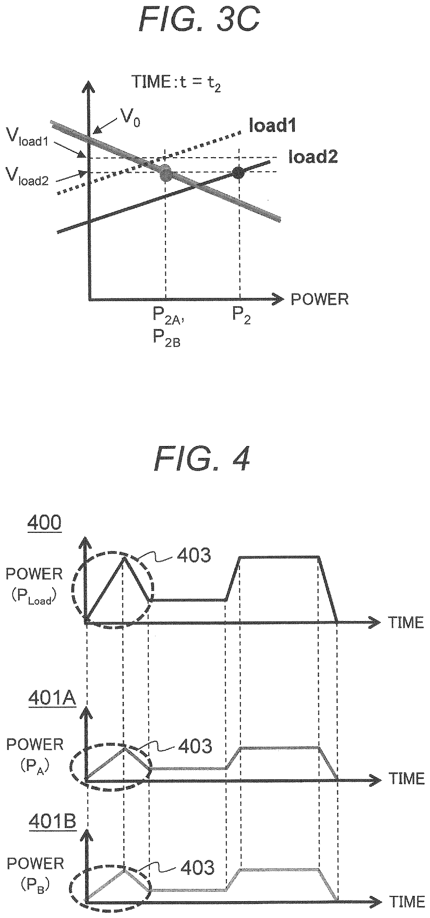

Furthermore, it is assumed that a load straight line of the load 11, which is a load straight line shown in FIG. 3B, at a time $t_1$ changes to a load straight line shown in FIG. 3C at a time $t_2$. As the load changes, the output voltage of each power supply moves to a balanced operating point. In this example, when the power from the power supply A becomes the power $P_{2A}$ and the power from the power supply B is $P_{2B}$, those output voltages are balanced. In this example, since a proportional division rate of the power between the power supplies is equal to each other, the power from each power supply is always equal even if the load straight line moves.

FIG. 4 shows time fluctuations 401A and 401B of the output powers proportionally divided into the power supplies A and B according to a time fluctuation 400 of the load power. If each power supply is the power supply of FIG. 3A, the same time fluctuation is shown between the power supply A and the power supply B so as to equally proportionally divide the load. Therefore, even at a sudden change time 403 such as a sudden increase in load power, both power supplies undertake the power that changes suddenly by half.

However, when fuel cells are used as the power sources, a power generation is performed based on a fuel supply, so that the power sources cannot often cope with sudden changes in load. That is, since the fuel supply system is mechanical, a response is slower 1 to 2 orders of magnitude than an electrical response. If the fuel supply is not in time for an increase in an output power required, there is a risk of insufficient or excessive fuel in the battery, which may deteriorate the battery cell significantly even at a short time.

From the above, in the power supply system in which the drooping power supplies are connected in parallel, the power supply to the load can be autonomously controlled by determining the proportional division rate according to the capacity of the power supply between the power supplies in advance. That is, a power control according to the static characteristics of each power supply and load can be performed. On the other hand, as illustrated in FIG. 4, if a power change at each power supply with respect to a sudden load power change is determined by the proportional division rate determined by the static characteristics, there is a risk that a power source that is difficult to respond to the sudden power fluctuation like the fuel cell may deteriorate.

SUMMARY OF THE INVENTION

Therefore, in the present invention, there can be provided a power supply system that can control a power according to the dynamic characteristics of the power sources. In a power supply system that supplies a power to a load by combining multiple power supplies with different temporal response characteristics of an output power using fuel cells and storage batteries as power sources in a microgrid, a mobile body, or the like, a control can be performed while changing not only a steady power distribution (proportional division) but also an increase or decrease rate at the time of a sudden change of a load power according to the circumstances of each power supply.

A power supply system that supplies a power to a load includes a first power supply that includes a first power source and a power supply circuit; a second power supply that is connected in parallel with the first power supply and includes a second power source of a type different from the first power source and a power supply circuit; and a power supply management device, in which the power is supplied to the load from the first power supply and the second power supply, each of the power supply circuits provided in the first power supply and the second power supply includes an output voltage control unit that controls an output voltage output by the power supply based on a voltage command value, a drooping characteristic calculation unit that calculates the voltage command value to cause the output voltage to droop at a predetermined drooping rate with respect to the output power output by the power supply, and a ramp rate control unit that controls the voltage command value to reduce an amount of change of the output voltage when the amount of change of the output power2A per unit time exceeds a predetermined ramp rate, and the power supply management device sets a ramp rate for each of the first power supply and the second power supply, and makes the ramp rate set to the first power supply different from the ramp rate set to the second power supply.

A power supply system that can control a power according to dynamic characteristics of a power source is provided. Other problems and novel features will be revealed from the description in the present specification and accompanying drawings herein.

BRIEF DESCRIPTION OF THE DRAWINGS

FIG. 1A shows one example of a power supply system;

FIG. 1B shows another example of the power supply system;

FIG. 2A is a block diagram of a droop control DC power supply circuit;

FIG. 2B is a diagram showing an operating point when a load is connected to a drooping power supply;

FIG. 3A shows a power supply system in which drooping power supplies A and B are connected in parallel;

FIG. 3B is a diagram illustrating a subject of the present invention;

FIG. 3C is a diagram illustrating the subject of the present invention;

FIG. 4 is a diagram illustrating the subject of the present invention;

FIG. 5A is a block diagram of a correction droop control DC power supply circuit;

FIG. 5B is a diagram illustrating a definition of a ramp rate r;

FIG. 6A is a flowchart of initialization in a ramp rate control unit;

FIG. 6B is a flowchart of resetting in the ramp rate control unit;

FIG. 6C is a flowchart of voltage correction value calculation in the ramp rate control unit;

FIG. 7 is a power supply system in which the correction drooping power supplies A and B are connected in parallel;

FIG. 8 is a diagram showing a time series change of an output power from a power supply with a change in a load power;

FIG. 9A is a diagram showing the time series change of the output power from the power supply with the change in the load power;

FIG. 9B is a diagram showing a change in an operating point on drooping characteristics with a change in a load straight line;

FIG. 9C is a diagram showing the change in the operating point on the drooping characteristics with the change in the load straight line;

FIG. 9D is a diagram showing the change in the operating point on the drooping characteristics with the change in the load straight line;

FIG. 10A is a diagram illustrating the definition of the ramp rate r;

FIG. 10B is a diagram showing the time series change of the output power from the power supply with the change in the load power;

FIG. 10C is a diagram showing the change in the operating point on the drooping characteristics with the change in the load straight line;

FIG. 10D is a diagram showing the change in the operating point on the drooping characteristics with the change in the load straight line;

FIG. 10E is a diagram showing the change in the operating point on the drooping characteristics with the change in the load straight line;

FIG. 11 shows a power supply system having a power supply management unit;

FIG. 12A shows a ramp rate setting table;

FIG. 12B is a flowchart for power supply update;

FIG. 13 shows a power supply system having a power supply management unit;

FIG. 14A shows a setting table;

FIG. 14B is a flowchart for ramp rate adjustment;

FIG. 15 shows a power supply system having a power supply management unit;

FIG. 16A shows a setting table; and

FIG. 16B is a flowchart for ramp rate adjustment.

DETAILED DESCRIPTION OF THE PREFERRED EMBODIMENTS

[Example 1]

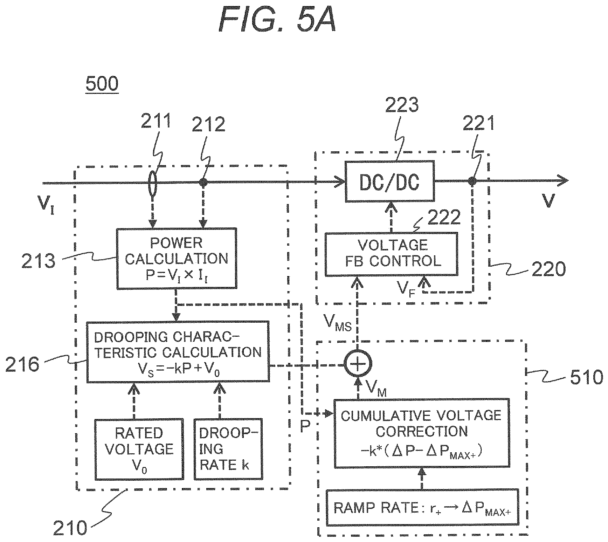

FIG. 5A shows the configuration of a power supply circuit in the present example. A ramp rate control unit 510 capable of setting a ramp rate from the outside is added to a droop control DC power supply circuit shown in FIG. 2A. The configurations common to those in FIG. 2A are represented with the same symbols, and duplicated descriptions will be omitted.

In a correction droop control DC power supply circuit 500 of the present example, a correction voltage command value $V_{MS}$ obtained by adding a voltage correction value $V_M$ determined by the ramp rate control unit 510 to a voltage command value $V_S$ output from a drooping characteristic calculation unit 210 is input to a voltage control DC/DC converter 220. When a power value P input from a power calculation unit 213 changes sharply, the ramp rate control unit 510 corrects the voltage command value Vs with the voltage correction value $V_M$ with reference to a ramp rate of a certain temporal inclination

r (= $\Delta P/\Delta t$).

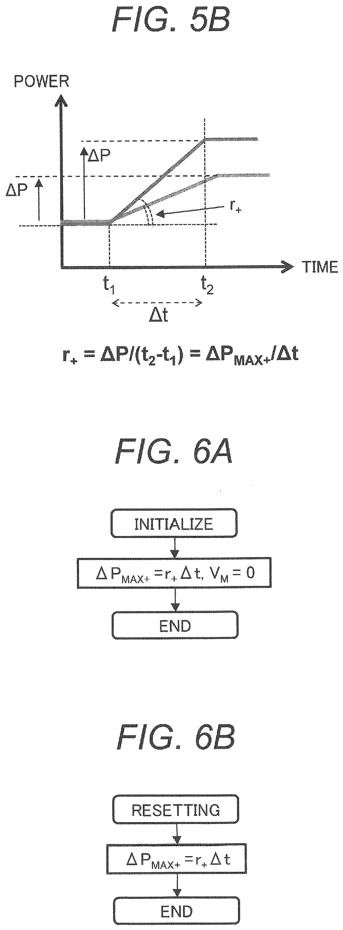

The definition of the ramp rate r will be described with reference to FIG. 5B. The ramp rate r is generally defined as a power change $\Delta P$ at a time interval ($t_2 - t_1$). In this example, the ramp rate control unit 510 defines the ramp rate by a maximum power difference $\Delta P_{MAX}$ at a time interval $\Delta t$ at which the power value P is sampled. When the ramp rate is defined separately between the power rising time and the power falling time, a maximum power difference corresponding to a ramp rate r+ at the rising time is $\Delta P_{MAX+}$ and a maximum power difference corresponding to a ramp rate r- at the falling time is $\Delta P_{MAX-}$.

The operation of the ramp rate control unit 510 will be described with reference to flowcharts of FIGS. 6A to 6C. The flowcharts show the operation of the ramp rate control unit 510 at a load rising time. FIG. 6A shows an initialization flow. A voltage correction value $V_M$ is initialized to 0, and the maximum power difference $\Delta P_{MAX+}$ is calculated according to the ramp rate r+ at the rising time and a unique sampling interval $\Delta t$, that are set in the power supply system. FIG. 6B is a resetting flow executed when the ramp rate r+ at the rising time is reset in the power supply system. Examples for resetting the ramp rate will be described later as Examples 3 and 4. The maximum power difference $\Delta P_{MAX+}$ is recalculated according to a change in setting.

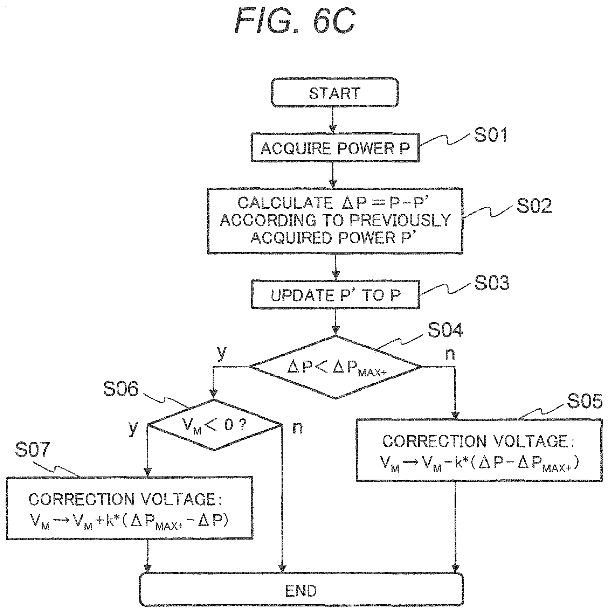

FIG. 6C is a voltage correction value calculation flow, and the voltage correction value $V_M$ is calculated using the maximum power difference $\Delta P_{MAX+}$ calculated in the initialization flow or the resetting flow. The voltage correction value calculation flow is activated every time interval of $\Delta t$, and the power value P is obtained from the power calculation unit 213 (S01). A difference $\Delta P$ (= P-P') is calculated according to a previously acquired power value P' stored by the ramp rate control unit 510 (S02). Thereafter, the previously acquired power value P' is updated to the power value P acquired this time (S03). The difference value $\Delta P$ is compared with the set maximum power difference $\Delta P_{MAX+}$ (S04), and if the difference value $\Delta P$ is $\Delta P_{MAX+}$ or higher, the voltage correction value $V_M$ is output so as to eliminate the above condition, that is, so as not to correct the voltage in response to $\Delta P$ (S05). An example of a correction formula of the voltage correction value $V_M$ at this time is shown in Expression 1.

$$V_M \rightarrow V_M - k \times (\Delta P - \Delta P_{MAX+}) \quad \ldots \quad (EX. \ 1)$$

where k indicates a drooping rate of the drooping characteristic calculation unit 210, and a symbol "→" means updating, indicating that each correction is cumulative.

On the other hand, when the difference value $\Delta P$ is lower than $\Delta P_{MAX+}$ (yes in Step S04) and the voltage correction value $V_M$ is 0 (no in Step S06), the voltage command value $V_S$ is not corrected (voltage correction value $V_M$= 0). Alternatively, if the difference value $\Delta P$ is lower than $\Delta P_{MAX+}$ (yes in Step S04) and when if the power correction has already been performed and the voltage correction value $V_M$ is negative (yes in Step S06), the voltage correction value $V_M$ is updated to return toward 0 (S07).

$$V_M \rightarrow V_M + k \times (\Delta P_{MAX+} - \Delta P) \quad \ldots \quad (EX. \ 2)$$

Expression 2 is an example of a correction formula for the voltage correction value $V_M$.

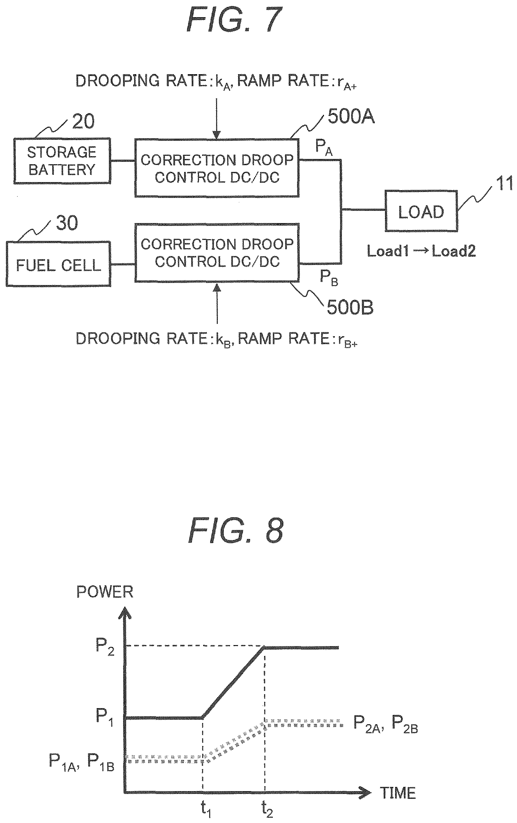

The power supply system in which the correction droop power supplies A and B equipped with the correction droop control power supply circuit described above are connected in parallel as well as FIG. 3A is shown in FIG. 7. In the following description, an example in which a drooping rate k is equal so that a load power is proportionally equally divided between the power supplies A and B is shown, but in order to change a balance, the drooping rate k of the two power supplies may be different.

In the power supply system of FIG. 7, a time series change when the same ramp rates $r_{A+}$ and $r_{B+}$ are set for the two power supplies will be described. When an incremental $\Delta P$ of a load power per unit time $\Delta t$ changes beyond a sum of the ramp rates of the two power supplies (= $r_{A+}+r_{B+}$), the voltage command value $V_S$ is corrected. FIG. 8 shows a time series change of the powers $P_A$ and $P_B$ output by the power supplies A and B when the load power changes from a power $P_1$ to a power $P_2$. The respective powers output by the power supplies A and B at a load power $P_1$ are $P_{1A}$, and $P_{1B}$ and the respective powers output by the power supplies A and B at a load power $P_2$ are $P_{2A}$ and $P_{2B}$. In this case, since the power command values of the power supplies A and B are corrected by the same voltage correction value $V_M$, the power supplies A and B show the same drooping characteristics, and the power also changes equally. The change of the operating point on the drooping characteristics with a change in the load straight line is the same as in FIGS. 3A and 3B.

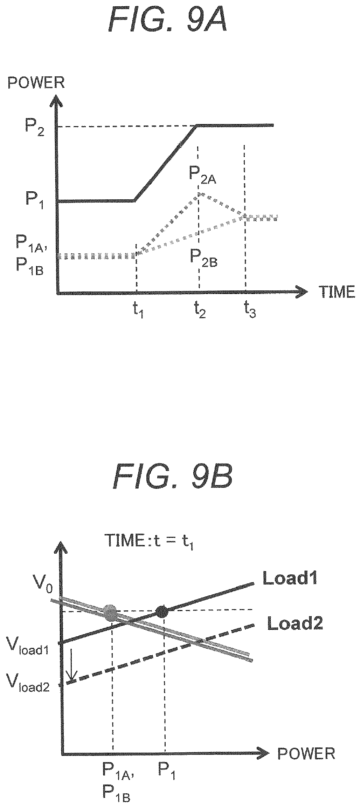

On the other hand, the time series change when different ramp rates $r_{A+}$ and $r_{B+}$ ($r_{A+} > r_{B+}$ are set) are for the two power supplies will be described with reference to FIGS. 9A to 9D. FIG. 9A shows the time series change of the powers $P_A$ and $P_B$ output by the power supplies A and B when the load power changes from the power $P_1$ to the power $P_2$. FIGS. 9B to 9D show a change in the operating point on the drooping characteristics with a change in the load straight line.

FIG. 9B shows the operating points of the power supplies A and B at the time $t_1$ in FIG. 9A. For the load power $P_1$, when the power from power supply A becomes a power $P_{1A}$ and the power from the power supply B becomes a power $P_{1B}$, the voltages are balanced. In this state, the load straight line moves from a Load1 to a Load2. From time $t_1$ to time $t_2$, when the ramp rate $r_{B+}$ of the power supply B is less than a power increment of the load, the power change of the power supply B is limited and changes gradually as compared with the power supply A. That is, a characteristic straight line indicating the drooping characteristics of the power supply B is corrected downward, and the power proportional division of the power supply B is temporarily reduced compared to the power supply A. From time $t_2$ to time $t_3$, when the power change of the load decreases (in this case, there is no power change), the voltage correction value $V_M$ at the power supply B returns to 0. That is, the characteristic straight line of the power supply B returns to an original state.

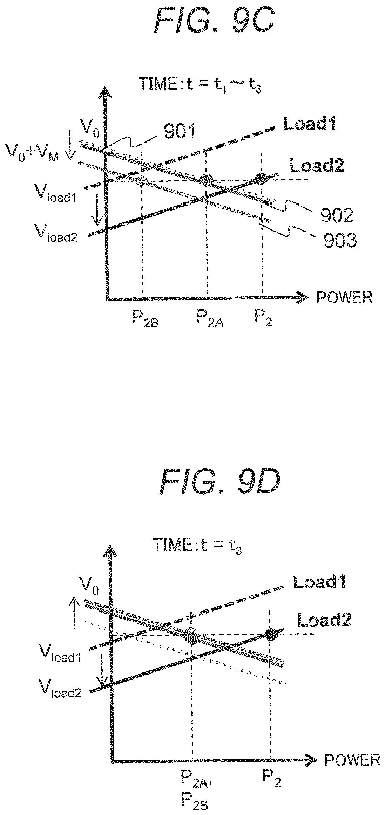

This state is shown in FIG. 9C. From time $t_1$ to time $t_3$, when the ramp rate $r_{A+}$ of the power supply A is greater than the power increment of the load and the ramp rate $r_{B+}$ of the power supply B is less than the power increment of the load, a characteristic straight line 901 of the power supply A does not change, but the characteristic straight line of the power supply B is corrected downward from a characteristic straight line 902 at a time $t_1$ to a characteristic straight line 903. As a result, the power burdened by the power supply A is a power $P_{2A}$ and the power burdened by the power supply B is a power $P_{2B}$ and the power $P_{2A} >$ the power $P_{2B}$ is satisfied.

FIG. 9D shows the operating points of the power supplies A and B at the time $t_3$ in FIG. 9A. At this time, the characteristic straight line of the power supply B returns to an original state, and the voltages are balanced when the power from the power supply A is the power $P_{2A}$ and the power from the power supply B is the power $P_{2B}$ with respect to the load power $P_2$.

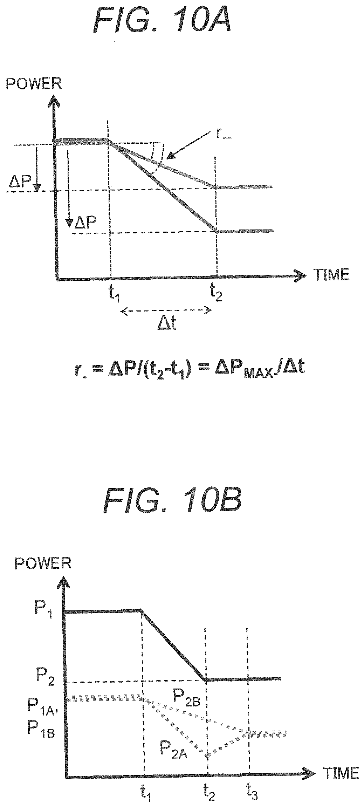

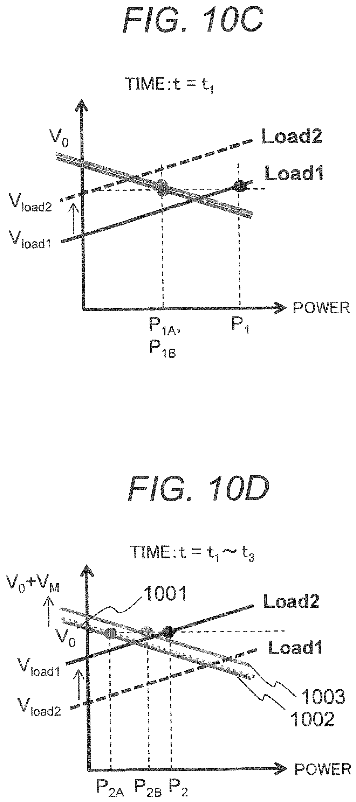

When the load power is reduced, a power distribution between the power supplies can be automatically changed when the load power suddenly changes using the ramp rate rat the falling time. The definition of the ramp rate r- at the falling time is shown in FIG. 10A. The ramp rate r- at the falling time is set so that the correction droop control DC power supply circuit 500 can change the power distribution between the power supplies even when the load power is suddenly changed in a direction of lowering the load power by the same flow. The time series change when the different ramp rates $r_{A-}$ and $r_{B-}$ ($r_{A-} > r_{B-}$) are set for the two power supplies will be described with reference to FIGS. 10B to 10E. FIG. 10B shows a time series change of the powers $P_A$ and $P_B$ output by the power supplies A and B when the load power changes from the power $P_1$ to the power $P_2$. FIGS. 10C to 10E show a change in the operating point on the drooping characteristics with a change in the load straight line.

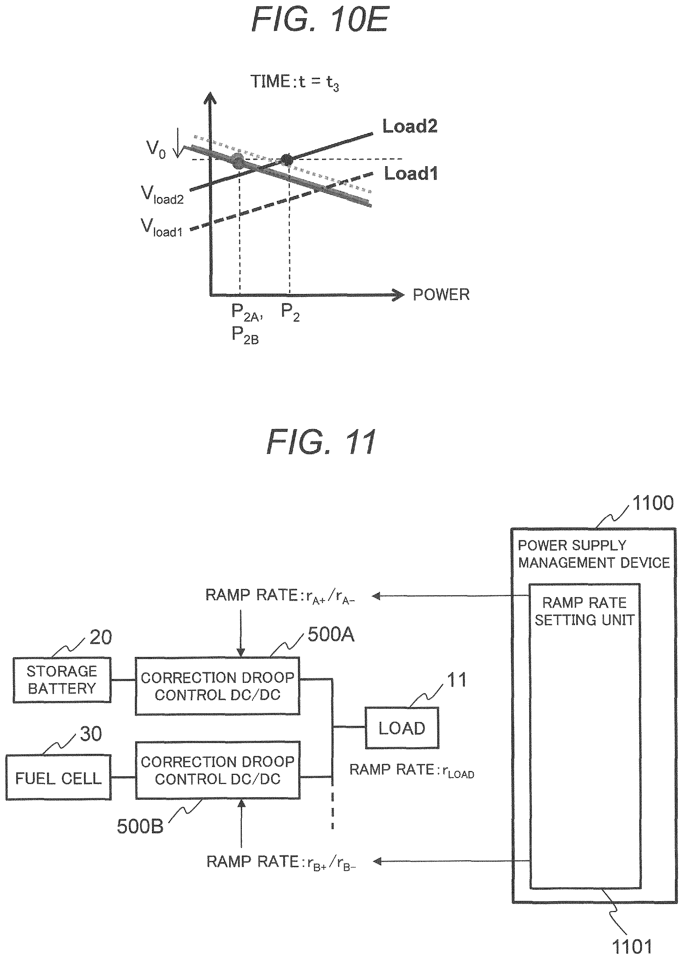

FIG. 10C shows the operating points of the power supplies A and B at the time $t_1$ in FIG. 10B. In this state, the load straight line moves from a Load1 to a Load2. FIG. 10D shows the operating points of the power supplies A and B from time $t_1$ to time $t_3$. From time $t_1$ to time $t_3$, when the ramp rate $r_{A-}$ of the power supply A is greater than the power reduction of the load and the ramp rate $r_{B-}$ of the power supply B is less than the power reduction of the load, a characteristic straight line 1001 of the power supply A does not change, but the characteristic straight line of the power supply B is corrected upward from the characteristic straight line 1002 at the time $t_1$ to the characteristic straight line 1003. As a result, the power burdened by the power supply A is a power $P_{2A}$ and the power burdened by the power supply B is a power $P_{2B}$ and the power $P_{2B} >$ the power $P_{2A}$ is met. In this way, it can be seen that the amount of power reduction burdened by the power supply A is larger than that of the power supply B, and that much of the fluctuation is undertaken by the power supply A. FIG. 10E shows the operating points of the power supplies A and B at the time $t_3$. At this time, the characteristic straight line of the power supply B returns to its original state.

In this way, a different ramp rate is set for each power supply so that the amount of power change can be differentiated and proportionally divided for each power supply during a sudden load change. In particular, the differentiated proportional division can be automatically performed without asking for commands sequentially from the outside.

[Example 2]

A power supply system using the power supply described in Example 1 will be described. A power supply system of FIG. 11 includes a power supply management device 1100 for managing a power supply system, and the power supply management device 1100 includes a ramp rate setting unit 1101 for setting a ramp rate of each power supply. The ramp rate is determined according to a list of connected power supplies, and the same ramp rate may be applied to the same type of power supply, but different ramp rates are set for power supplies with different response characteristics. For example, when there are three types of power supplies including a supercapacitor (SC), a storage battery (LIB), and a fuel cell (FC), a different ramp rate is set according to the response characteristics. As a result, the fluctuation can be absorbed in the order of the power supply having a high ramp rate during the fluctuation of a load 11. However, it is necessary to make the sum of the ramp rates of each power supply equal to or more than a ramp rate $t_{LOAD}$ of the load. This is because when the sum of the ramp rates of each power supply is less than the ramp rate $t_{LOAD}$ of the load, the power supply system cannot follow the power change of the load 11.

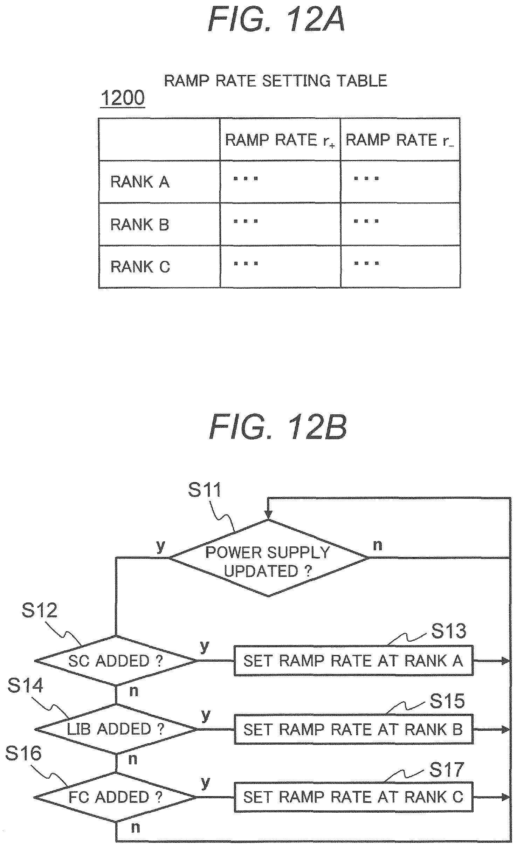

FIG. 12A shows a ramp rate setting table 1200 held by the ramp rate setting unit 1101. The power supply is divided into ranks according to the response characteristics, and a ramp rate r+ at a rising time and a ramp rate r- at a falling time are set for each rank. Since the response characteristics of the three types of power supplies described above are SC>LIB>>FC, SC is classified as a rank A, LIB is classified as a rank B, and FC is classified as a rank C. The type of the power source shown in this example is an example, and does not limit that the power supply system has all the types of power sources exemplified.

FIG. 12B shows a flowchart of the power update executed by the ramp rate setting unit 1101. This flow is activated when there is a change in the configuration of the power supply in the power supply system (S11). The ramp rate according to the rank of the added power supply is set with reference to the ramp rate setting table 1200 (S12 to S17).

[Example 3]

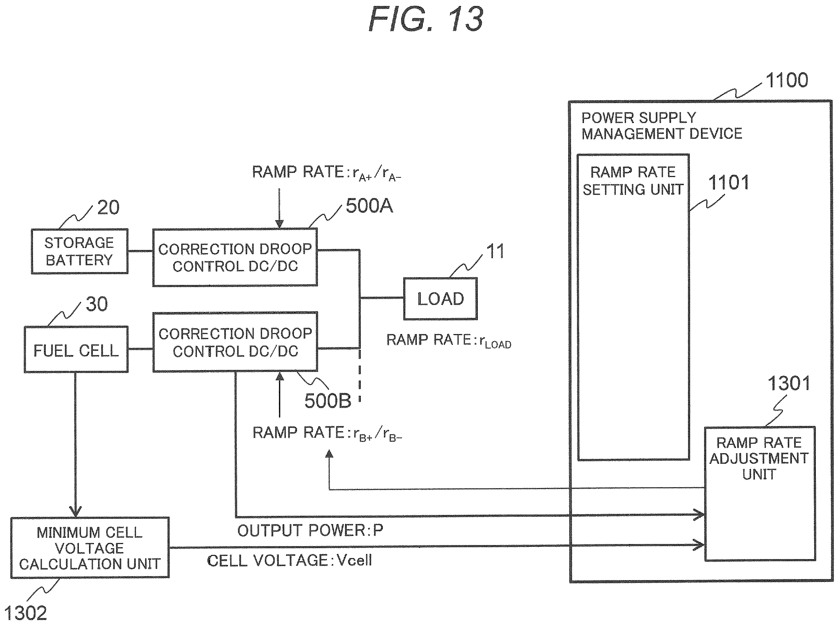

In a power supply system of FIG. 13, a power supply management device 1100 includes a ramp rate adjustment unit 1301 for adjusting a ramp rate for a power supply using a fuel cell (hereinafter referred to as a fuel cell power supply) as a power source. During fluctuations in a load power (especially when increasing), a fuel shortage may occur in a battery without keeping up with a fuel supply to a fuel cell, and a voltage of a battery cell configuring a fuel cell 30 may decrease. This situation degrades the battery cell. In order to prevent such deterioration, while monitoring a cell voltage of the fuel cell 30, a ramp rate of a fuel cell power supply is adjusted so as not to exceed a threshold value to protect the fuel cell.

The fuel cell power supply includes a minimum cell voltage calculation unit 1302. The minimum cell voltage calculation unit 1302 monitors an output voltage of a battery cell group configuring the fuel cell 30 and notifies the ramp rate adjustment unit 1301 in the power supply management device 1100 of an output voltage value Vcell of a battery cell generating a minimum value voltage.

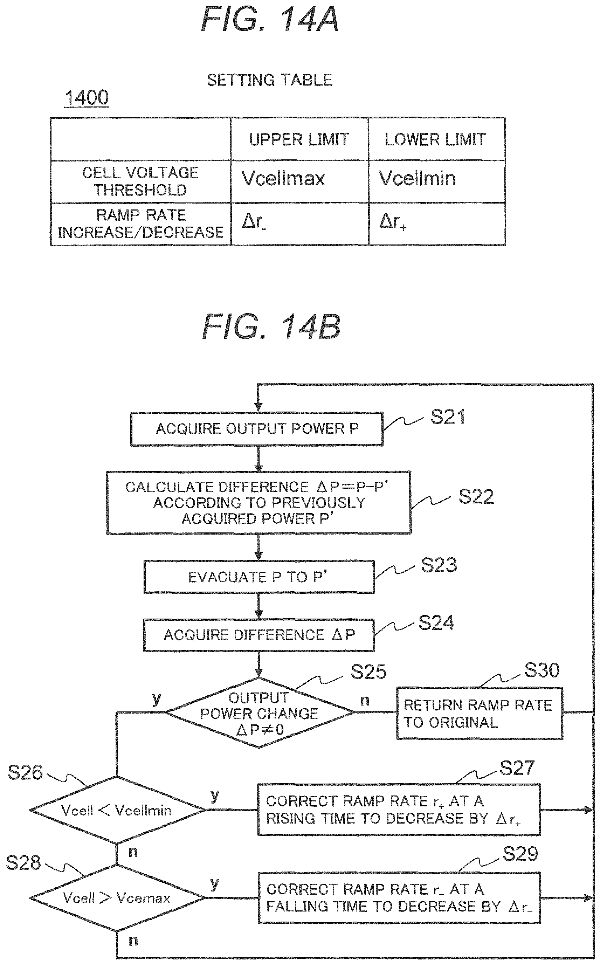

FIG. 14A shows a setting table 1400 held by the ramp rate adjustment unit 1301. A cell voltage threshold of the cell voltage Vcell notified from the minimum cell voltage calculation unit 1302 and a correction width $\Delta r$ of the ramp rate to be adjusted when exceeding the threshold are set.

FIG. 14B shows a flowchart of a ramp rate adjustment executed by the ramp rate adjustment unit 1301. As a premise, as described in Example 2, a predetermined ramp rate is set for the fuel cell power supply. In the ramp rate adjustment unit 1301, an output power P from the fuel cell 30 is constantly monitored (S21 to S25), and when there is a change in an output power (yes in Step S25), the cell voltage Vcell is evaluated with reference to the setting table 1400. When the load power is increasing and the cell voltage Vcell is lower than a lower limit Vcellmin, it is assumed that a fuel supply cannot keep up with a change in the load power even if the ramp rate setting of the fuel cell power supply is a rank C and the fuel is lacking. Therefore, the power increase from the fuel cell power supply is suppressed by notifying the fuel cell power supply so that a ramp rate r+ at a rising time of the fuel cell power supply is corrected to reduce by a correction width $\Delta r_+$ specified in the setting table 1400 (S26 to S27).

Also, if the cell voltage Vcell is not less than an upper limit Vcellmax with a reduced load power, the fuel may be excessive. Therefore, the power reduction from the fuel cell power supply is suppressed by notifying the fuel cell power supply so that a ramp rate r- at a falling time is corrected to reduce by a correction width $\Delta r_-$ specified in the setting table 1400 (S28 to S29).

When the load is not fluctuating (no in Step S25), the fuel cell power supply is notified to return the ramp rate to the original(S30).

As described above, even after setting the ramp rate according to the fuel cell power supply, the ramp rate can be corrected so as not to exceed an allowable value by monitoring the cell voltage of the fuel cell to prevent deterioration of the fuel cell.

[Example 4]

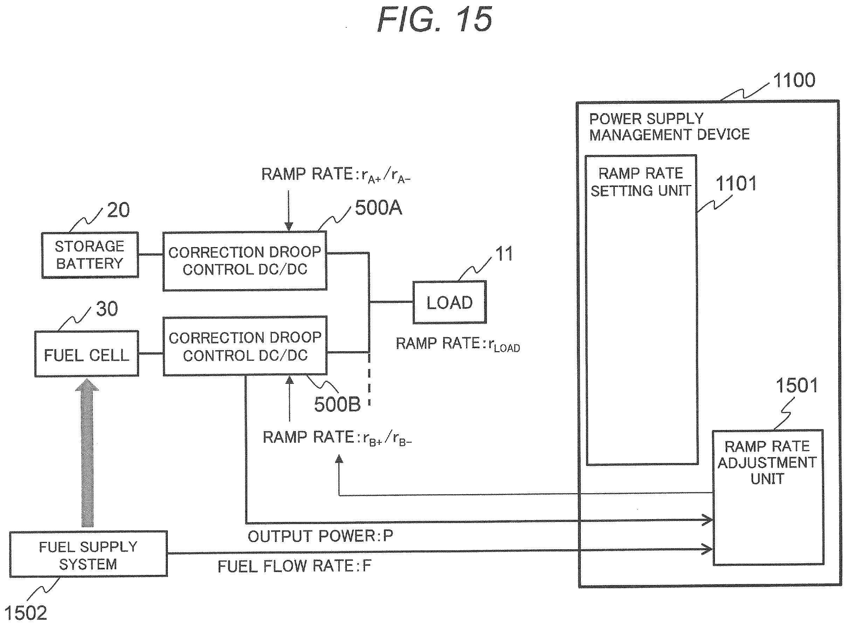

In the power supply system of FIG. 15, the power supply management device 1100 includes a ramp rate adjustment unit 1501 that adjusts a ramp rate of the fuel cell power supply. The ramp rate adjustment unit 1501 monitors a fuel flow rate F of the fuel supply system 1502 that supplies a fuel to the fuel cell 30, and adjusts the ramp rate of the fuel cell power supply when the flow rate does not keep up with the output increase of the fuel cell power supply to protect the fuel cell. Specifically, the ramp rate adjustment unit 1501 monitors the fuel flow rate F, and when the flow rate change rate (increase rate) does not exceed the increase rate of the output power, the ramp rate adjustment unit 1501 adjusts the ramp rate of the fuel cell power supply to protect the fuel cell.

The fuel supply system 1502 of the fuel cell power supply supplies a fuel to the fuel cell 30 and notifies the ramp rate adjustment unit 1501 in the power supply management device 1100 of the fuel flow rate F.

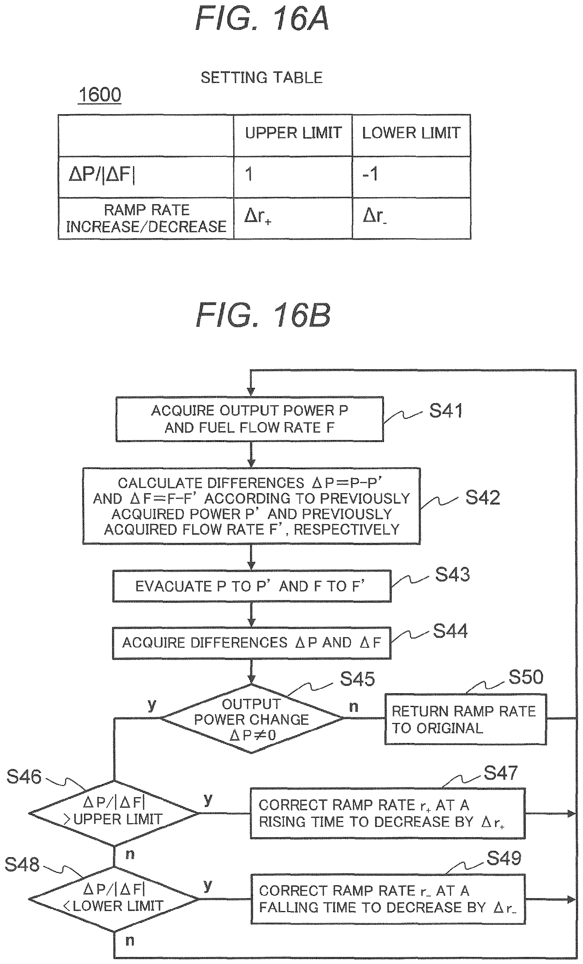

FIG. 16A shows a setting table 1600 held by the ramp rate adjustment unit 1501. A threshold of a ratio of the output voltage change rate to the flow rate change rate (hereinafter referred to as a change ratio $\Delta P/|\Delta F|$) and a correction width $\Delta r$ of the ramp rate to be adjusted when exceeding the threshold are set.

FIG. 16B shows a flowchart of the ramp rate adjustment executed by the ramp rate adjustment unit 1501. As a premise, as described in Example 2, a predetermined ramp rate is set for the fuel cell power supply. The ramp rate adjustment unit 1501 constantly monitors the output power P and the fuel flow rate F from the fuel cell 30 (S41 to S45), and when there is a change in the output power (yes in Step S45), the ramp rate adjustment unit 1501 evaluates the change rate ratio $\Delta P/|\Delta F|$ with reference to the setting table 1600. When the change ratio $\Delta P/|\Delta F|$ exceeds an upper limit value of 1 in a state where a load power is increasing, it is assumed that a fuel supply does not keep up with a change in the load power, and the fuel is lacking. Therefore, the ramp rate adjustment unit 1501 notifies the fuel cell power supply to correct the ramp rate r+ at the rising time of the fuel cell power cell to reduce by a correction width $\Delta r_+$ spec-

ified in the setting table 1600 to suppress a power increase from the fuel cell power supply (S46 to S47).

Further, when the change ratio $\Delta P/|\Delta F|$ falls below the lower limit value -1 in a state where the load power is decreasing, there is a possibility that the fuel is excessive. Therefore, the ramp rate adjustment unit 1501 notifies the fuel cell power supply to correct the ramp rate r- at the falling time to reduce by the correction width $\Delta r$ specified in the setting table 1600 to suppress the power reduction from the fuel cell power supply (S48 to S49).

When there is no change in the load (no in Step S45), the ramp rate adjustment unit 1501 notifies the fuel cell power supply to return the ramp rate to the original (S50).

As described above, even after setting the ramp rate according to the fuel cell power supply, the change rate ratio $\Delta P/|\Delta F|$ of the fuel cell can be monitored to correct the ramp rate so as not to exceed an allowable value, thereby preventing the deterioration of the fuel cell.

The present invention has been described with reference to the examples. In the above examples, the power supply system that supplies a DC power to the load has been described, but the same applies to a power supply system that supplies an AC power to the load. In this case, the same effects can be obtained by similarly controlling an effective voltage of the AC voltage output by the PCS.

Further, in a parallel load system in which a plurality of loads are connected in parallel for one power supply, different drooping characteristic control and ramp rate control for each load may be applied to the power supply circuit. It can be easily analogized that a direction of the power is only reversed from the examples, and the same effect can be obtained. In this case, with a reduction in the ramp rate for a specific load, for example, a water electrolysis cell as compared with other loads, rapid power fluctuations can be suppressed and the electrolysis cell can be prevented from deterioration.

REFERENCE SIGNS LISTS

10, 11: load, 20: storage battery, 30: fuel cell, 40: PCS, 50: system, 60: DC/DC converter, 200: droop control DC power supply circuit, 210: drooping characteristic calculation unit, 211: current sensor, 212, 221: voltage sensor, 213: power calculation unit, 216: drooping characteristic calculation unit, 220: voltage control DC/DC converter, 222: voltage feedback control unit, 223: DC/DC converter, 231: characteristic straight line, 232: load straight line, 233: operating point, 500: correction droop control DC power supply circuit, 510: ramp rate control unit, 1100: power supply management device, 1101: ramp rate setting unit, 1200: ramp rate setting table, 1301: ramp rate adjustment unit, 1302: minimum cell voltage calculation unit, 1400: setting table, 1501: ramp rate adjustment unit, 1502: fuel supply system, 1600: setting table.

**Claims**

1. A power supply system that supplies a power to a load, comprising:

   a first power supply that includes a first power source and a power supply circuit;
   a second power supply that is connected in parallel with the first power supply and includes a second power source of a type different from the first power source and a power supply circuit; and
   a power supply management device,
   wherein the power is supplied to the load from the first power supply and the second power supply,
   each of the power supply circuits provided in the first power supply and the second power supply includes an output voltage control unit that controls an output voltage output by the power supply based on a voltage command value, a drooping characteristic calculation unit that calculates the voltage command value to cause the output voltage to droop at a predetermined drooping rate with respect to the output power output by the power supply, and a ramp rate control unit that corrects the voltage command value to reduce an amount of change of the output voltage when the amount of change of the output power per unit time exceeds a predetermined ramp rate, and
   the power supply management device sets a ramp rate for each of the first power supply and the second power supply, and makes the ramp rate set to the first power supply different from the ramp rate set to the second power supply.

2. The power supply system according to Claim 1,

   wherein the power supply management device holds a ramp rate setting table having a ramp rate determined according to a type of the power source, and sets the ramp rate for each power supply based on the ramp rate setting table, and the ramp rate in the ramp rate setting table is set according to a response characteristic of the power source.

3. The power supply system according to Claim 2, wherein the type of the power source includes at least a storage battery and a fuel cell.

4. The power supply system according to Claim 1, further comprising a plurality of power supplies including the first power supply and the second power supply,
   wherein the power supply management device sets the ramp rates of the plurality of power supplies to cause a sum of the ramp rates set for each of the plurality of power supplies to be more than or equal to a maximum change amount per unit time of the load power of the load.

5. The power supply system according to Claim 1,

> wherein the first power supply is a power supply using the fuel cell as a power source,
> the first power supply includes a minimum cell voltage calculation unit that monitors an output voltage of a battery cell group configuring the fuel cell and notifies the power supply management device of a cell voltage value, which is the output voltage value of the battery cell generating a minimum output voltage,
> the power supply management device includes a ramp rate adjustment unit that is notified of the output power value of the first power supply and the cell voltage value from the first power supply, and
> the ramp rate adjustment unit notifies the first power supply of the ramp rate, which is set to the first power supply, reset to be reduced by a predetermined range if the cell voltage value exceeds a predetermined cell voltage threshold when there is a change in the output power value of the first power supply.

6. The power supply system according to Claim 5, wherein the ramp rate adjustment unit notifies the first power supply to return the reset ramp rate to an original ramp rate when there is no change in the output power value of the first power supply.

7. The power supply system according to Claim 1,

> wherein the first power supply is a power supply using the fuel cell as a power source,
> the first power supply includes a fuel supply system that supplies a fuel to the fuel cell,
> the power supply management device includes a ramp rate adjustment unit that is notified of the output power value of the first power supply from the power supply circuit of the first power supply and a fuel flow rate value supplied by the fuel supply system to the fuel cell, and
> the ramp rate adjustment unit notifies the first power supply of the ramp rate, which is set to the first power supply, reset to be reduced by a predetermined range if a ratio of a change rate of the output power value of the first power supply to a change rate of the fuel flow rate value exceeds a predetermined ratio when there is a change in the output power value of the first power supply.

8. The power supply system according to Claim 7, wherein the ramp rate adjustment unit notifies the first power supply to return the reset ramp rate to an original ramp rate when there is no change in the output power value of the first power supply.

9. A power supply management device that manages a plurality of power supplies in a power supply system that supplies a power to a load from the plurality of power supplies connected in parallel,

> wherein each of the plurality of power supplies in the power supply system includes a power source and a power supply circuit, and each of the power supply circuits provided in the plurality of power supplies includes an output voltage control unit that controls an output voltage output by the power supply based on a voltage command value, a drooping characteristic calculation unit that calculates the voltage command value to cause the output voltage to droop at a predetermined drooping rate with respect to the output power output by the power supply, and a ramp rate control unit that corrects the voltage command value to reduce an amount of change of the output voltage when the amount of change of the output power per unit time exceeds a predetermined ramp rate,
> the power supply management device includes a ramp rate setting unit that sets the ramp rate for each of the plurality of power supplies, and
> the ramp rate setting unit makes a ramp rate set in a first power supply included in the plurality of power supplies different from a ramp rate set in a second power supply including a power source of a type different from that of the power source of the first power supply, which is included in the plurality of power supplies.

10. The power supply management device according to Claim 9,

> wherein the ramp rate setting unit sets the ramp rate of the power supply based on a ramp rate setting table having a ramp rate determined according to a type of power source, and
> the ramp rate in the ramp rate setting table is set according to a response characteristic of the power source.

11. The power supply management device according to Claim 9,

> wherein the first power supply is a power supply using a fuel cell as a power source, and includes a minimum cell voltage calculation unit that monitors the output voltage of the battery cell group configuring the fuel cell, and notifies the power supply management device of the cell voltage value, which is the output voltage value of the battery cell that generates a minimum output voltage,

the power supply management device includes a ramp rate adjustment unit that is notified of an output voltage value of the first power supply and the cell voltage value from the first power supply, and

the ramp rate adjustment unit notifies the first power supply of the ramp rate, which is set to the first power supply, reset to be reduced by a predetermined range if the cell voltage value exceeds a predetermined cell voltage threshold when there is a change in the output power value of the first power supply.

12. The power supply management device according to Claim 9,

wherein the first power supply is a power supply using a fuel cell as a power source, and includes a fuel supply system that supplies a fuel to the fuel cell,

the power supply management device includes a ramp rate adjustment unit that is notified of an output power value of the first power supply from the power supply circuit of the first power supply and a fuel flow rate value supplied to the fuel cell by the fuel supply system, and

the ramp rate adjustment unit notifies the first power supply of the ramp rate, which is set to the first power supply, reset to be reduced by a predetermined range if a ratio of a change rate of the output power value of the first power supply to a change rate of the fuel flow rate value exceeds a predetermined ratio when there is a change in the output power value of the first power supply.

13. A power supply that supplies a power to a load, comprising:

a power source; and
a power supply circuit,
wherein the power supply circuit includes an output voltage control unit that controls an output voltage output by the power supply based on a voltage command value, a drooping characteristic calculation unit that calculates the voltage command value to cause the output voltage to droop at a predetermined drooping rate with respect to the output power output by the power supply, and a ramp rate control unit that corrects the voltage command value to reduce an amount of change of the output voltage when the amount of change of the output power per unit time exceeds a predetermined ramp rate.

14. The power supply according to Claim 13, wherein the ramp rate is set according to a response characteristic of the power source.

## FIG. 1A

```
              ┌─────────┐       ┌──────────────┐
         ─────│   PCS   │───────│   STORAGE    │  20
              └─────────┘  40   │   BATTERY    │
              ┌─────────┐       └──────────────┘
         ─────│   PCS   │───────│  FUEL CELL   │  30
   50         └─────────┘  40   └──────────────┘
  (~)    
              ┌──────────────┐
         ─────│    LOAD      │  10
  SYSTEM      └──────────────┘
 (200V, 50Hz)
```

## FIG. 1B

```
              ┌─────────┐       ┌──────────────┐
         ─────│  DC/DC  │───────│   STORAGE    │  20
              └─────────┘  60   │   BATTERY    │
              ┌─────────┐       └──────────────┘
         ─────│  DC/DC  │───────│  FUEL CELL   │  30
              └─────────┘  60   └──────────────┘

         ┌──────────────┐
         │    LOAD      │  11
         └──────────────┘
```

## FIG. 2A

<u>200</u>

211 212

213 — POWER CALCULATION $P = V_I \times I_I$

216 — DROOPING CHARAC-TERISTIC CALCULATION $V_S = -kP + V_0$

RATED VOLTAGE $V_0$

DROOP-ING RATE k

210

$V_I$

223 221

DC/DC

222

VOLTAGE FB CONTROL

220

$V_S$

$V_F$

V

## FIG. 2B

$V = -kP + V_0$

RATED VALUE ($V_0$)

233

load

232

231

$V_{load}$

$P_{load}$

POWER (P)

## FIG. 3A

DROOPING RATE: $k_A$

20 STORAGE BATTERY

200A DROOP CONTROL DC/DC

DROOPING RATE: $k_B$

11 LOAD

30 FUEL CELL

200B DROOP CONTROL DC/DC

## FIG. 3B

TIME: $t = t_1$

$V_0$

load1

$V_{load1}$

POWER

$P_{1A}$  $P_1$
$P_{1B}$

# FIG. 3C

TIME : t = t$_2$

V$_0$

V$_{load1}$

V$_{load2}$

load1

load2

POWER

P$_{2A}$,
P$_{2B}$

P$_2$

# FIG. 4

400

POWER
(P$_{Load}$)

403

TIME

401A

POWER
(P$_A$)

403

TIME

401B

POWER
(P$_B$)

403

TIME

# FIG. 5A

500

211  212

223  221

$V_I$

DC/DC

V

213

POWER
CALCULATION
$P = V_I \times I_I$

222

VOLTAGE
FB CONTROL

220

$V_F$

216

DROOPING CHARAC-
TERISTIC CALCULATION
$V_S = -kP + V_0$

$V_{MS}$

510

RATED
VOLTAGE
$V_0$

DROOP-
ING
RATE k

$V_M$

P

CUMULATIVE VOLTAGE
CORRECTION
$-k^*(\Delta P - \Delta P_{MAX+})$

210

RAMP RATE: $r_+ \rightarrow \Delta P_{MAX+}$

# FIG. 5B

$$r_+ = \Delta P/(t_2-t_1) = \Delta P_{MAX+}/\Delta t$$

# FIG. 6A

# FIG. 6B

## FIG. 6C

START

ACQUIRE POWER P — S01

CALCULATE $\Delta P = P - P'$
ACCORDING TO PREVIOUSLY
ACQUIRED POWER $P'$ — S02

UPDATE $P'$ TO P — S03

S04 — $\Delta P < \Delta P_{MAX+}$

y

n

S06 — $V_M < 0 ?$

y   n

S05

CORRECTION VOLTAGE:
$V_M \rightarrow V_M - k*(\Delta P - \Delta P_{MAX+})$

S07

CORRECTION VOLTAGE:
$V_M \rightarrow V_M + k*(\Delta P_{MAX+} - \Delta P)$

END

17

# FIG. 7

DROOPING RATE: $k_A$, RAMP RATE: $r_{A+}$

20
**STORAGE BATTERY**

500A
**CORRECTION DROOP CONTROL DC/DC** $P_A$

11
**LOAD**
Load1 → Load2

30
**FUEL CELL**

**CORRECTION DROOP CONTROL DC/DC** $P_B$

500B

DROOPING RATE: $k_B$, RAMP RATE: $r_{B+}$

# FIG. 8

POWER

$P_2$

$P_1$

$P_{1A}$, $P_{1B}$

$P_{2A}$, $P_{2B}$

$t_1$    $t_2$    TIME

# FIG. 9A

# FIG. 9B

## FIG. 9C

TIME: $t = t_1 \sim t_3$

## FIG. 9D

TIME: $t = t_3$

# FIG. 10A

$$r_- = \Delta P/(t_2-t_1) = \Delta P_{MAX}/\Delta t$$

# FIG. 10B

## FIG. 10C

TIME: $t = t_1$

## FIG. 10D

TIME: $t = t_1 \sim t_3$

# FIG. 10E

TIME : t = $t_3$

# FIG. 11

# FIG. 12A

RAMP RATE SETTING TABLE

1200

|  | RAMP RATE $r_+$ | RAMP RATE $r_-$ |
|---|---|---|
| RANK A | . . . | . . . |
| RANK B | . . . | . . . |
| RANK C | . . . | . . . |

# FIG. 12B

S11

y ← POWER SUPPLY UPDATED ? → n

S12 — SC ADDED ? — y → SET RAMP RATE AT RANK A — S13

n

S14 — LIB ADDED ? — y → SET RAMP RATE AT RANK B — S15

n

S16 — FC ADDED ? — y → SET RAMP RATE AT RANK C — S17

n

# FIG. 13

EP 4 089 872 A1

# FIG. 14A

SETTING TABLE

1400

|  | UPPER LIMIT | LOWER LIMIT |
|---|---|---|
| CELL VOLTAGE THRESHOLD | Vcellmax | Vcellmin |
| RAMP RATE INCREASE/DECREASE | $\Delta r_-$ | $\Delta r_+$ |

# FIG. 14B

```
                    ┌──────────────────────────────┐
                    │  ACQUIRE OUTPUT POWER P       │─── S21
                    └──────────────────────────────┘
                                  ↓
        ┌────────────────────────────────────────────┐
        │  CALCULATE DIFFERENCE ΔP=P–P′               │─── S22
        │  ACCORDING TO PREVIOUSLY                    │
        │  ACQUIRED POWER P′                          │
        └────────────────────────────────────────────┘
                                  ↓
              ┌──────────────────────────────┐
              │     EVACUATE P TO P′          │─── S23
              └──────────────────────────────┘
                                  ↓
              ┌──────────────────────────────┐
              │   ACQUIRE DIFFERENCE ΔP       │─── S24
              └──────────────────────────────┘
```

S25

OUTPUT POWER CHANGE $\Delta P \neq 0$

S30 — RETURN RAMP RATE TO ORIGINAL

S26

Vcell < Vcellmin

y → S27 — CORRECT RAMP RATE $r_+$ AT A RISING TIME TO DECREASE BY $\Delta r_+$

S28

Vcell > Vcemax

y → S29 — CORRECT RAMP RATE $r_-$ AT A FALLING TIME TO DECREASE BY $\Delta r_-$

FIG. 15

RAMP RATE: $r_{A+}/r_{A-}$

POWER SUPPLY
MANAGEMENT DEVICE — 1100

RAMP RATE
SETTING UNIT    1101

20

STORAGE
BATTERY

500A

CORRECTION DROOP
CONTROL DC/DC

11

LOAD

30

FUEL CELL

CORRECTION DROOP
CONTROL DC/DC

500B

RAMP RATE: $r_{LOAD}$

RAMP RATE: $r_{B+}/r_{B-}$

1501

RAMP RATE
ADJUSTMENT
UNIT

FUEL SUPPLY
SYSTEM

OUTPUT POWER: P

FUEL FLOW RATE: F

1502

EP 4 089 872 A1

## FIG. 16A

SETTING TABLE

1600

|  | UPPER LIMIT | LOWER LIMIT |
|---|---|---|
| $\Delta P / |\Delta F|$ | 1 | -1 |
| RAMP RATE INCREASE/DECREASE | $\Delta r_+$ | $\Delta r_-$ |

## FIG. 16B

ACQUIRE OUTPUT POWER P
AND FUEL FLOW RATE F — S41

CALCULATE DIFFERENCES $\Delta P = P - P'$
AND $\Delta F = F - F'$ ACCORDING TO PREVIOUSLY
ACQUIRED POWER $P'$ AND PREVIOUSLY
ACQUIRED FLOW RATE $F'$, RESPECTIVELY — S42

EVACUATE P TO $P'$ AND F TO $F'$ — S43

ACQUIRE DIFFERENCES $\Delta P$ AND $\Delta F$ — S44

S45

OUTPUT
POWER CHANGE
$\Delta P \neq 0$ — y / n

S50

RETURN RAMP RATE
TO ORIGINAL

S46

$\Delta P / |\Delta F|$
> UPPER LIMIT — y

S47

CORRECT RAMP RATE $r_+$ AT A
RISING TIME TO DECREASE BY $\Delta r_+$

n

S48

$\Delta P / |\Delta F|$
< LOWER LIMIT — y

S49

CORRECT RAMP RATE $r_-$ AT A
FALLING TIME TO DECREASE BY $\Delta r_-$

n

Europäisches
Patentamt

European
Patent Office

Office européen
des brevets

# EUROPEAN SEARCH REPORT

**Application Number**

EP 22 16 1011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 787 272 B2 (WISCONSIN ALUMNI RES FOUND [US]) 31 August 2010 (2010-08-31) * figs.1, 12 and related passages of the description * ----- | 1-14 | INV. H02J3/38 H02J3/48 |

TECHNICAL FIELDS
SEARCHED (IPC)

H02J

The present search report has been drawn up for all claims

| Place of search | Date of completion of the search | Examiner |
|---|---|---|
| Munich | 9 August 2022 | Bourdon, Jérémy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 16 1011

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2022

| Patent document cited in search report | | Publication date | Patent family member(s) | | Publication date |
|---|---|---|---|---|---|
| US 7787272 | B2 | 31-08-2010 | EP | 2132852 A1 | 16-12-2009 |
| | | | US | 2008212343 A1 | 04-09-2008 |
| | | | WO | 2008109265 A1 | 12-09-2008 |

For more details about this annex : see Official Journal of the European Patent Office, No. 12/82

**EP 4 089 872 A1**

**Patent documents cited in the description**

- JP 2008130424 A